# EUROPEAN PATENT SPECIFICATION

(11) **EP 3 896 197 B1**
(45) Date of publication and mention of the grant of the patent: **05.06.2024**
(21) Application number: 20170108.3
(22) Date of filing: 17.04.2020
(51) Int. Cl.: C25B 1/04, C25B 15/02, C25B 15/08, B01D 53/14

(54) **SYSTEM AND METHOD FOR PRODUCING SYNTHESIS GAS**
SYSTEM UND VERFAHREN ZUR HERSTELLUNG VON SYNTHESEGAS
SYSTÈME ET PROCÉDÉ DE PRODUCTION DE GAZ DE SYNTHÈSE

(43) Date of publication of application: 20.10.2021
(73) Proprietor: Stølsnes, Roger R., 1367 Snarøya (NO)
(72) Inventor: Stølsnes, Roger R., 1367 Snarøya (NO)
(74) Representative: Hofstetter, Schurack & Partner

(56) References cited:
- GB-A- 2 552 010
- US-A1- 2018 086 985

## Description

The invention relates to a system and a method for producing synthesis gas from renewable resources as well as to a storage medium with a program code for controlling such a device.

Renewable energy fuels and corresponding synthesis gases from renewable resources can be produced by using renewable energy. Such gases and/or fuels can be stored for long periods and transported over long distances. Examples of renewable fuels are hydrogen, ammonia and methanol. It is known to produce such fuels using all types of renewable energy sources like hydropower, solar, wind, geothermal, etc. For example, a plant for producing methanol using geothermal energy was built at Iceland. Further pilot plants for producing hydrogen and ammonia using wind and solar energy are planned in several countries around the world. Furthermore, it is known technology to extract water, oxygen, nitrogen, and even CO2, from ambient air for different purposes. There are some examples in the prior art where such material extraction is used for fuel production.

Known processes and systems are still not very efficient compared to the high energy consumption they require. Therefore, it is the task of the present invention to provide a process and system which enable a more efficient way to produce synthetic gases from renewable sources. A further object of the invention is in specifying a storage medium with a program code, which ensures a corresponding control of such a system.

US 2018/086985 A1 discloses a process for the production of synthetically produced methane/gaseous and/or liquid hydrocarbons. For this purpose, hydrogen from an electrolytic arrangement which is operated by means of regeneratively generated electric energy and carbon dioxide are synthesized in a methane synthesis or Fischer-Tropsch synthesis or other suitable hydrocarbon synthesis, the carbon dioxide being produced from an air/gas flow by means of a carbon dioxide recovery system.

GB 2 552 010 A discloses a method for synthesising carbon compounds comprising generating electricity from a renewable source, e.g. nuclear or solar power; recovering carbon dioxide from the atmosphere; generating a supply of hydrogen; and reacting the recovered carbon dioxide with the hydrogen in an exothermic reaction, wherein recovering the carbon dioxide is powered using electricity E and thermal Th energy from the exothermic reaction.

According to the invention, these objects are solved by a system comprising the features of claim 1, a method comprising the features of claim 8 as well as a storage medium according to claim 13. Advantageous configurations with convenient developments of the invention are specified in the dependent claims, wherein advantageous configurations of each inventive aspect are to be regarded as advantageous configurations of the respectively other inventive aspect.

A first aspect of the invention relates to a system for producing synthesis gas from renewable resources comprising at least one means for capturing water vapour from ambient air, at least one means for providing energy by wind and/or solar and/or hydro energy, at least one storage means for storing the water vapour captured from the ambient air without going via the liquid phase of the water vapour, at least one means for performing a steam electrolysis of the water vapour stored by the storage means, wherein said means for providing energy is the power source for at least the means for performing a steam electrolysis, and at least one storage means for storing the synthesis gas provided by said means for performing steam electrolysis. Means for capturing vapour from ambient air can be selected from devices for so called "direct air capture (DAC)" which is a process for extracting carbon dioxide directly from the ambient air. The basic principle is that ambient air passes through a filter or an adsorption/absorption device that removes part of the CO2. The result of the process is pure CO₂, which can then be used for various purposes. Further, absorption structures can be used, wherein the absorption structures are formed for absorbing at least a part of the water and water vapour contained in the ambient air. With such an inventive system it is possible to provide a more efficient way to produce synthetic gases and/or renewable fuels from renewable sources. The system is particularly efficient because of the capture of vapour, e.g. water vapor, from the ambient air and the direct use of the water vapor, without going via the liquid phase of the vapour (water liquid phase), directly to steam electrolysis. The inventive system has energy efficiency advantages compared with more traditional dehumidifying systems which are taking down water vapour from air to liquid water, to feed the water electrolyser. Since vapour/steam electrolysis requires less energy to produce for example hydrogen compared to water electrolysis, there is no need for cooling down and condensate the water vapour extracted from air before processed into electrolysis. The synthesis gas is hydrogen gas and/or oxygen gas. According to an embodiment of the invention said storage means for storing the synthesis gas are compressed gas tanks. Particularly, the present invention is further directed to produce synthetic fuels based on the synthetic gases produced by the inventive system where all the energy and chemical components the fuel consist of (hydrogen and/or oxygen) is collected from the ambient air. The fuels can be hydrogen, carbon and/or nitrogen fuels.

In some embodiments, the system comprises compressor means located between said means for capturing water vapour and said storage means for storing the water vapour. Further, it is possible that the system comprises heating means for heating said means for capturing water vapour and/or for heating said storage means for storing the water vapour. Said compressor means and/or said heating means could be advantageously powered by said means for providing energy by wind and/or solar and/or hydro energy. The compression of the water vapour and the supply of compressed vapour to the means for steam electrolysis results in a particularly effective and low-energy steam electrolysis. The efficiency can be increased even further by additionally heating the aforementioned parts of the system. Furthermore, energy costs can be significantly reduced by using solar, hydro and/or wind power. Furthermore, the use of these types of energy is environmentally friendly and saves resources. Hence, the inventive system can be placed as a stand-alone system away from any supply of existing power grids and water pipes. Further, the inventive system needs no extra supply of raw materials under operation.

Further, it is possible that the inventive system comprises an AC or DC generator and/or an AC/DC inverter connected to said means for providing energy. In some embodiments the system further comprises means for controlling the energy flow in the system, wherein said means are connected to said means for providing energy. Inverters (DC/DC, AC/DC or DC/AC) can be used to ensure power with right voltage and frequency to the different sub systems. The power can be used to drive all processes of the inventive system.

A second aspect of the invention relates to a method for producing synthesis gas from renewable resources comprising at least the steps of capturing water vapour from ambient air, providing energy by wind and/or solar and/or hydro energy, storing the water vapour captured from the ambient air without going via the liquid phase of the water vapour, performing a steam electrolysis of the vapour stored, wherein said steam electrolysis is powered by said wind and/or solar and/or hydro energy, and storing the synthesis gas provided by said means for performing steam electrolysis, wherein the synthesis gas is hydrogen gas and/or oxygen gas. With such an inventive method it is possible to provide a more efficient way to produce synthetic gases and/or renewable fuels from renewable sources. The inventive method is particularly efficient because of the capture of water vapor from the ambient air and the direct use of the water vapour, without going via the liquid phase of the vapour (water liquid phase), directly to steam electrolysis. The inventive method has energy efficiency advantages compared with more traditional dehumidifying methods which are taking down water vapour from air to liquid water, to feed the water electrolyser. Since vapour/steam electrolysis requires less energy to produce for example hydrogen compared to water electrolysis, there is no need for cooling down the vapour extracted from air before processed into electrolysis. The synthesis gas is hydrogen gas and/or oxygen gas. Particularly, the present invention is further directed to produce synthetic fuels based on the synthetic gases produced by the inventive method where all the energy and chemical components in the fuel consist of (e.g.: hydrogen, oxygen) is collected from the ambient air. The fuels can be hydrogen, carbon or nitrogen fuels.

In some embodiments, the inventive method comprises the step of compressing the water vapour/steam captured from ambient air by compressor means. Furthermore, the method can comprise the step of providing heat to the step of capturing water vapour from ambient air and/or the step of storing the water vapour captured from the ambient air. The aforementioned compression of the water vapour and the supply of compressed water vapour to the means for steam electrolysis results in a particularly effective and low-energy steam electrolysis. The efficiency can be increased even further by additionally providing heat to the step of capturing water vapour from ambient air and/or the step of storing the water vapour. Furthermore, energy costs can be significantly reduced by using solar, hydro and/or wind power. Furthermore, the use of these types of energy is environmentally friendly and saves resources.

According to an embodiment of the inventive method the synthesis gas is stored in compressed gas tanks. This serves on the one hand the security of storage and on the other hand, the increase of storage capacities.

Furthermore, according to another embodiment of the inventive method, the method comprises controlling the energy flow of the system according to the first aspect of the invention. By controlling the energy flow of the system, energy consumption can be significantly optimized.

A third aspect of the invention relates to a storage medium with a program code, which is formed to control a system according to the first inventive aspect upon execution by a control device such that it performs a method according to the second inventive aspect. The features arising herefrom and the advantages thereof can be taken from the descriptions of the first and the second inventive aspect, wherein advantageous configurations of the first and the second inventive aspect are to be regarded as advantageous configurations of the third inventive aspect and vice versa.

Further features of the invention are apparent from the claims, the figures and the description of figures. There shows:
- Fig. 1: a schematic diagram of an inventive system according to a first embodiment; and
- Fig. 2: a schematic diagram of an inventive system according to a second embodiment

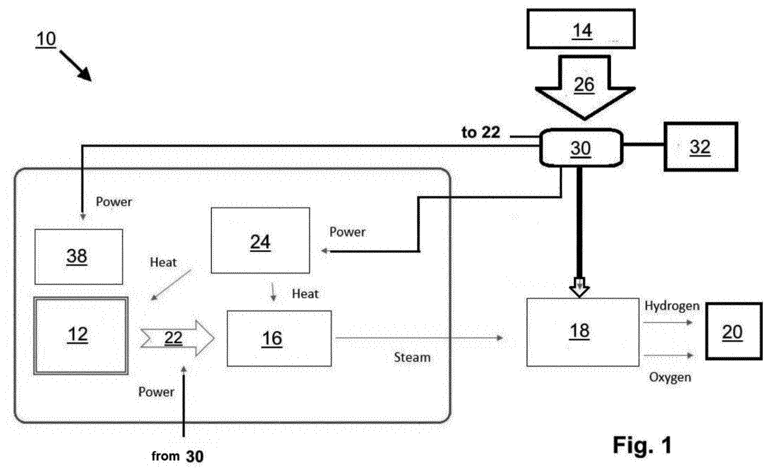

Fig. 1 shows a schematic diagram of a system 10 for producing synthesis gas from renewable resources according to a first embodiment. System 10 comprises a device 12 for capturing water vapour from ambient air and storage means 16 for storing the vapour captured from the ambient air. The synthesis gas is hydrogen gas and/or oxygen gas. Between the means 12 for capturing vapour from ambient air and the storage device 16 a compressor means 22 is located in fluid connection with both the means 12 and the storage device 16, where the compressor means 22 compresses the captured vapour before storage in the storage means 16. The storage device 16 can be an insulated steam tank. Such an isolated steam tank is used to have a buffer of high temperature steam that can be provided to the high temperature electrolysis (See means 18 for performing steam electrolysis). Known examples for the device 12 are air adsorption systems to collect steam and/or vapour. Humidity harvesting can also be done by using water vapor selective membranes. Further, the system 10 comprises means 14 for providing energy by wind and/or solar and/or hydro energy. In the shown embodiment a wind-turbine generates direct current (DC) power, alternatively alternate power (AC). Consequently, a DC generator 26 is connected to said means 14 for providing energy. Inverters (DC/DC, AC/DC or DC/AC; not shown) can be used to ensure power with right voltage and frequency to the different sub systems. The power can be used to drive all processes in the system 10. Furthermore, the system 10 comprising a means 30 for controlling the energy flow in the system 10, wherein said means 30 are connected to said means 14 for providing energy. Such an integrated monitoring system can regulate each component in the system 10 and the integration between those.

The system 10 further comprises means 18 fluidly connected to the storage means 16 for performing steam electrolysis of the vapour stored by the storage means 16. It can be seen from Figure 1 that said means 14 for providing energy is the power source for the means 18 for performing steam electrolysis. This solution has energy efficiency advantages compared with more traditional dehumidifiers taking down water vapour from air to liquid water, to feed the water electrolyser. Since vapour electrolysis requires less energy to produce hydrogen compared to water electrolysis, there is no need for cooling down the vapour extracted from air before processed into electrolysis.

Furthermore, it can be seen from Figure 1 that storage means 20 for storing the synthesis gas provided by said means 18 for performing steam electrolysis are fluidly connected to the storage means 20. The storage means 20 is designed to safely store the gas produced by steam electrolysis, such as oxygen or hydrogen.

The system 10 further comprising heating means 24 for heating said means 12 for capturing vapour and for heating said storage means 16 for storing the compressed vapour. Further, an air fan 38 is positioned adjacent to the device 12 for capturing vapour from ambient air to enhance the air flow passing through the device 12. Said means 14 for providing energy is also the power source for the heating means 24 and the air fan 38.

It can be seen from Figure 1 that the system 10 further comprises a battery 32 connected to the means 30 for controlling the energy flow in the system 10. The energy stored in the battery 32 is used to continue to supply the system 10 with sufficient energy during periods when the natural energy production fails, e.g. when there is no wind in the case of wind turbines. This allows the production times of system 10 to be significantly increased. In times when more energy is produced than the system 10 needs, the excess energy can be stored in battery 32.

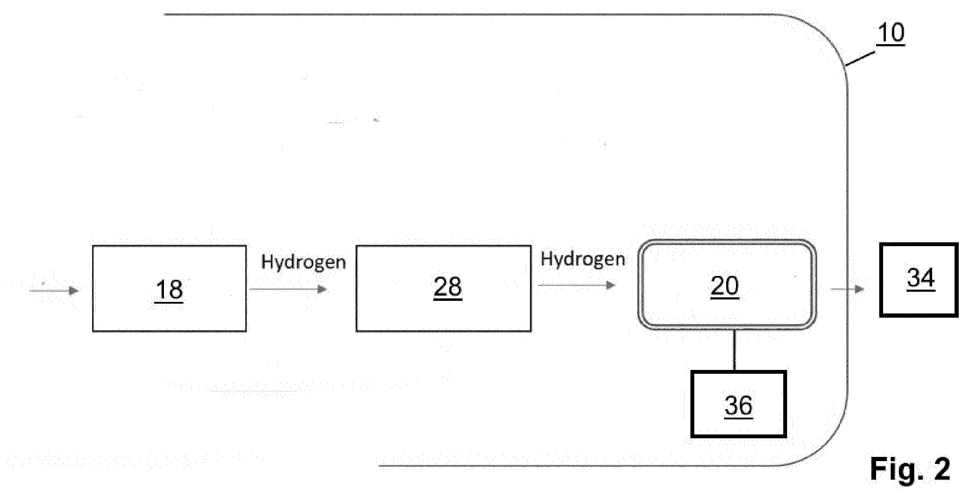

Fig. 2 shows a schematic diagram of a system 10 for producing synthesis gas from renewable resources according to a second embodiment. The structure of system 10 shown in Fig. 2 basically corresponds to the system 10 shown in Fig. 1. Therefore, identical reference numbers denote identical elements of system 10. In contrast to the embodiment shown in Fig. 1, the system 10 shown in Fig. 2 has additional compressor means 28, which compress the synthetic gas produced in the means 18 for performing steam electrolysis. The compressor means 28 are are fluidly connected to the storage means 20. The storage means 20 is designed to safely store the compressed gas produced by steam electrolysis, such as oxygen or hydrogen.

It is possible that the produced synthetic gas is used as fuel and will be collected in tanks (not shown) located next to or within the system 10. From the tanks the fuel will be filled over to fuel transportation trucks (not shown) that will transport the fuel to larger storage tanks or fueling stations or directly to vehicles that will use the fuel for their own purposes. In Fig. 2 a hydrogen fueling station 34 is shown. The delivery quantity and the delivery speed of the hydrogen are controlled by a control device 36.

One set up of the system 10 comprises a wind turbine, a DC generator, a battery, means for capturing water vapour from ambient air, an insulated vapor tank, means for performing high temperature electrolysis, a hydrogen compressor, and a compressed hydrogen tank. An integrated monitoring system will regulate each component and the integration between those.

In one embodiment of the present invention the system can be a stand-alone wind turbine producing fuel from ambient air.

The parameter values indicated in the documents for the definition of process and measurement conditions for the characterization of specific characteristics of the inventive subject matter are to be considered as encompassed by the scope of the invention also within the scope of deviations - for example due to measurement errors, system errors, DIN tolerances and the like.

### List of reference characters:

- 10: System
- 12: Means for capturing vapour
- 14: Means for providing energy by wind and/or solar and/or hydro energy
- 16: Storage means
- 18: Means for performing a steam electrolysis
- 20: Storage means
- 22: Compressor means
- 24: Heating means
- 26: DC generator
- 28: Compressor means
- 30: Means for controlling the energy flow
- 32: Battery
- 34: Hydrogen fueling mechanism
- 36: Control device
- 38: Air fan

## Claims

1. System for producing synthesis gas from renewable resources comprising
- at least one means (12) for capturing water vapour from ambient air;
- at least one means (14) for providing energy by wind and/or solar and/or hydro energy;
- at least one storage means (16) for storing the water vapour captured from the ambient air without going via the liquid phase of the water vapour;
- at least one means (18) for performing a direct steam electrolysis of the water vapour stored by the storage means (16), wherein said means (14) for providing energy is the power source for at least the means (18) for performing a steam electrolysis; and
- at least one storage means (20) for storing the synthesis gas provided by said means (18) for performing steam electrolysis, wherein the synthesis gas is hydrogen gas and/or oxygen gas.

2. System according to claim 1, further comprising compressor means (22) located between said means (12) for capturing water vapour and said storage means (16) for storing the water vapour and fluidly connected thereto.

3. System according to any one of the preceding claims, further comprising heating means (24) for heating said means (12) for capturing the water vapour and/or for heating said storage means (16) for storing the water vapour.

4. System according to claim 2 or 3, wherein said compressor means (22) and/or said heating means (24) are powered by said means (14) for providing energy by wind and/or solar and/or hydro energy.

5. System according to any one of the preceding claims, further comprising an AC or DC generator (26) and/or an AC/DC inverter connected to said means (14) for providing energy.

6. System according to any one of the preceding claims, further comprising a means (30) for controlling the energy flow in the system (10), wherein said means (30) are connected to said means (14) for providing energy.

7. System according to any one of the preceding claims, wherein said storage means (20) for storing the synthesis gas are compressed gas tanks.

8. Method for producing synthesis gas from renewable resources comprising at least the steps of
- capturing water vapour from ambient air;
- providing energy by wind and/or solar and/or hydro energy;
- storing the water vapour captured from the ambient air without going via the liquid phase of the water vapour;
- performing a direct steam electrolysis of the water vapour stored, wherein said steam electrolysis is powered by said wind and/or solar and/or hydro energy; and
- storing the synthesis gas provided by said means for performing steam electrolysis, wherein the synthesis gas is hydrogen gas and/or oxygen gas.

9. Method according to claim 8, wherein said water vapour captured from ambient air is compressed by compressor means (22).

10. Method according to any one of claims 8 or 9, wherein heat is provided to the step of capturing water vapour from ambient air and/or the step of storing the water vapour captured from the ambient air.

11. Method according to any one of claims 8 to 10, wherein said method comprises controlling the energy flow in the system (10) according to claim 6.

12. Method according to any one of claims 8 to 11, wherein storing the synthesis gas provided by means (18) for performing steam electrolysis includes storing the synthesis gas under compressed conditions.

13. A storage medium with a program code, which program code is formed to control a system (10) according to any one of claims 1 to 7 upon execution by at least one control device (36), such that it performs a method according to any one of claims 8 to 12.

## Patentansprüche

1. System zum Erzeugen von Synthesegas aus erneuerbaren Ressourcen, das umfasst
- mindestens eine Einrichtung (12) zum Einfangen von Wasserdampf aus Umgebungsluft;
- mindestens eine Einrichtung (14) zum Bereitstellen von Energie durch Wind- und/oder Solar- und/oder Wasserenergie;
- mindestens eine Speichereinrichtung (16) zum Speichern des aus der Umgebungsluft eingefangenen Wasserdampfs, ohne über die flüssige Phase des Wasserdampfs zu gehen;
- mindestens eine Einrichtung (18) zum Durchführen einer direkten Dampfelektrolyse des durch die Speichereinrichtung (16) gespeicherten Wasserdampfs, wobei die Einrichtung (14) zum Bereitstellen von Energie die Leistungsquelle für zumindest die Einrichtung (18) zum Durchführen einer Dampfelektrolyse ist; und
- mindestens eine Speichereinrichtung (20) zum Speichern des durch die Einrichtung (18) zum Durchführen einer Dampfelektrolyse bereitgestellten Synthesegases, wobei das Synthesegas Wasserstoffgas und/oder Sauerstoffgas ist.

2. System nach Anspruch 1, das ferner eine Kompressoreinrichtung (22) umfasst, die zwischen der Einrichtung (12) zum Einfangen von Wasserdampf und der Speichereinrichtung (16) zum Speichern des Wasserdampfs angeordnet ist und fluidtechnisch damit verbunden ist.

3. System nach einem der vorangehenden Ansprüche, das ferner eine Heizeinrichtung (24) zum Heizen der Einrichtung (12) zum Einfangen des Wasserdampfs und/oder zum Heizen der Speichereinrichtung (16) zum Speichern des Wasserdampfs umfasst.

4. System nach Anspruch 2 oder 3, wobei die Kompressoreinrichtung (22) und/oder die Heizeinrichtung (24) durch die Einrichtung (14) zum Bereitstellen von Energie durch Wind- und/oder Solar- und/oder Wasserenergie versorgt werden.

5. System nach einem der vorangehenden Ansprüche, das ferner einen Wechselstrom- oder Gleichstromgenerator (26) und/oder einen Wechselstrom/Gleichstrom-Inverter umfasst, der mit der Einrichtung (14) zum Bereitstellen von Energie verbunden ist.

6. System nach einem der vorangehenden Ansprüche, das ferner eine Einrichtung (30) zum Steuern des Energieflusses in dem System (10) umfasst, wobei die Einrichtung (30) mit der Einrichtung (14) zum Bereitstellen von Energie verbunden ist.

7. System nach einem der vorangehenden Ansprüche, wobei die Speichereinrichtung (20) zum Speichern des Synthesegases Druckgastankts sind.

8. Verfahren zum Erzeugen von Synthesegas aus erneuerbaren Ressourcen mit zumindest den Schritten
- Einfangen von Wasserdampf aus Umgebungsluft;
- Bereitstellen von Energie durch Wind- und/oder Solar- und/oder Wasserenergie;
- Speichern des aus der Umgebungsluft eingefangenen Wasserdampfs, ohne über die flüssige Phase des Wasserdampfs zu gehen;
- Durchführen einer direkten Dampfelektrolyse des gespeicherten Wasserdampfs, wobei die Dampfelektrolyse durch die Wind- und/oder Solar- und/oder Wasserenergie versorgt wird; und
- Speichern des durch die Einrichtung zum Durchführen einer Dampfelektrolyse bereitgestellten Synthesegases, wobei das Synthesegas Wasserstoffgas und/oder Sauerstoffgas ist.

9. Verfahren nach Anspruch 8, wobei der aus Umgebungsluft eingefangene Wasserdampf durch eine Kompressoreinrichtung (22) komprimiert wird.

10. Verfahren nach einem der Ansprüche 8 oder 9, wobei Wärme zu dem Schritt des Einfangens von Wasserdampf aus Umgebungsluft und/oder zu dem Schritt des Speicherns des aus der Umgebungsluft eingefangenen Wasserdampfs zugeführt wird.

11. Verfahren nach einem der Ansprüche 8 bis 10, wobei das Verfahren das Steuern des Energieflusses in dem System (10) nach Anspruch 6 umfasst.

12. Verfahren nach einem der Ansprüche 8 bis 11, wobei das Speichern des durch die Einrichtung (18) zum Durchführen einer Dampfelektrolyse bereitgestellten Synthesegases das Speichern des Synthesegases unter komprimierten Bedingungen umfasst.

13. Speichermedium mit einem Programmcode, wobei der Programmcode dazu ausgebildet ist, ein System (10) nach einem der Ansprüche 1 bis 7 bei der Ausführung durch mindestens eine Steuervorrichtung (36) zu steuern, so dass es ein Verfahren nach einem der Ansprüche 8 bis 12 durchführt.

## Revendications

1. Système pour produire du gaz de synthèse à partir de ressources renouvelables, comportant :
- au moins des moyens (12) destinés à capturer de la vapeur d'eau à partir de l'air ambiant ;
- au moins des moyens (14) destinés à fournir de l'énergie par de l'énergie éolienne et/ou solaire et/ou hydraulique ;
- au moins des moyens de stockage (16) destinés à stocker la vapeur d'eau capturée à partir de l'air ambiant sans passer par la phase liquide de la vapeur d'eau ;
- au moins des moyens (18) destinés à réaliser une électrolyse de vapeur directe de la vapeur d'eau stockée par les moyens de stockage (16), lesdits moyens (14) destinés à fournir de l'énergie étant la source d'alimentation au moins des moyens (18) destinés à réaliser une électrolyse de vapeur ; et
- au moins des moyens de stockage (20) destinés à stocker le gaz de synthèse fourni par lesdits moyens (18) destinés à réaliser une électrolyse de vapeur, le gaz de synthèse étant le gaz hydrogène et/ou le gaz oxygène.

2. Système selon la revendication 1, comportant en outre des moyens de compression (22) situés entre lesdits moyens (12) destinés à capturer la vapeur d'eau et lesdits moyens de stockage (16) destinés à stocker la vapeur d'eau et fluidiquement reliés à ceux-ci.

3. Système selon l'une quelconque des revendications précédentes, comportant en outre des moyens de chauffage (24) pour chauffer lesdits moyens (12) destinés à capturer la vapeur d'eau et/ou pour chauffer lesdits moyens de stockage (16) destinés à stocker la vapeur d'eau.

4. Système selon la revendication 2 ou 3, dans lequel lesdits moyens de compression (22) et/ou lesdits moyens de chauffage (24) sont alimentés par lesdits moyens (14) destinés à fournir de l'énergie par de l'énergie éolienne et/ou solaire et/ou hydraulique.

5. Système selon l'une quelconque des revendications précédentes, comportant en outre un générateur AC ou DC (26) et/ou un onduleur AC/DC relié auxdits moyens (14) destinés à fournir de l'énergie.

6. Système selon l'une quelconque des revendications précédentes, comportant en outre des moyens (30) pour commander le flux d'énergie dans le système (10), lesdits moyens (30) étant reliés auxdits moyens (14) destinés à fournir de l'énergie.

7. Système selon l'une quelconque des revendications précédentes, dans lequel lesdits moyens de stockage (20) destinés à stocker le gaz de synthèse sont des réservoirs de gaz comprimé.

8. Procédé pour produire du gaz de synthèse à partir de ressources renouvelables, comportant au moins les étapes consistant à :
- capturer de la vapeur d'eau à partir de l'air ambiant ;
- fournir de l'énergie par de l'énergie éolienne et/ou solaire et/ou hydraulique ;
- stocker la vapeur d'eau capturée à partir de l'air ambiant sans passer par la phase liquide de la vapeur d'eau ;
- réaliser une électrolyse de vapeur directe de la vapeur d'eau stockée, ladite électrolyse de vapeur étant alimentée par ladite énergie éolienne et/ou solaire et/ou hydraulique ; et
- stocker le gaz de synthèse fourni par lesdits moyens destinés à réaliser une électrolyse de vapeur, le gaz de synthèse étant le gaz hydrogène et/ou le gaz oxygène.

9. Procédé selon la revendication 8, dans lequel ladite vapeur d'eau capturée à partir de l'air ambiant est comprimée par des moyens de compression (22).

10. Procédé selon l'une quelconque des revendications 8 ou 9, dans lequel de la chaleur est fournie à l'étape de capture de vapeur d'eau à partir de l'air ambiant et/ou à l'étape de stockage de la vapeur d'eau capturée à partir de l'air ambiant.

11. Procédé selon l'une quelconque des revendications 8 à 10, dans lequel ledit procédé comporte la commande du flux d'énergie dans le système (10) selon la revendication 6.

12. Procédé selon l'une quelconque des revendications 8 à 11, dans lequel le stockage du gaz de synthèse fourni par les moyens (18) destinés à réaliser l'électrolyse de vapeur inclut le stockage du gaz de synthèse dans des conditions comprimées.

13. Support de stockage avec un code de programme, lequel code de programme étant formé pour commander un système (10) selon l'une quelconque des revendications 1 à 7 lors de l'exécution par au moins un dispositif de commande (36), de telle sorte qu'il met en oeuvre un procédé selon l'une quelconque des revendications 8 à 12.
